# EUROPEAN PATENT APPLICATION

(11) **EP 1 361 748 A2**
(43) Date of publication of application: **12.11.2003**
(21) Application number: 03252682.4
(22) Date of filing: 28.04.2003
(51) Int. Cl.: H04N 5/262

(54) **Improved processing of images**

(30) Priority: 30.04.2002 GB 0209953
(71) Applicant: Hewlett-Packard Development Company, L.P., Houston, TX 77070 (US)
(72) Inventor: Pilu, Maurizio, Bristol, BS37 0RJ (GB)
(74) Representative: Marsh, David John

(57) **Abstract**

A method and apparatus is described for processing a zoomed sequence of images comprising a first image at a first magnification, a later image at a second magnification, and at least one intermediate image at a magnification between said first and second magnifications. The method comprises: applying an electronic zoom to each of the intermediate images so as to magnify each of the intermediate images to the same magnification level as the higher of the first and second magnifications.

## Description

### Field of the Invention

The present invention relates to improvements in and relating to methods and apparatus suitable for the processing of zoomed sequences of images.

### Background to the Invention

Numerous cameras are currently available that capture a sequence of images, and have a zoom feature that allows a user to progressively zoom into or out from interesting details. The zoom can be an optical zoom, a digital zoom, or a zoom comprising both optical and digital zooms. Various cameras include such zooms, including video cameras and camcorders (both analogue and digital), surveillance cameras, and digital and analogue "stills" cameras that are arranged to capture sequences of still images and/or video sequences.

A zoom feature allows a camera to change from a long shot to a close-up shot (or vice versa). Historically, only an optical zoom (also termed mechanical zoom) was possible. An optical zoom normally utilises a zoom lens in which the focal length is continuously variable whilst maintaining a fixed focal plane, so as to provide variable magnification of the subject.

In more recent years, electronic zooms have been developed, which act to enlarge (or diminish) a predetermined area of a picture by using electronic processing. This processing can be performed during the capture of the picture, or subsequently by the camera or even by utilising post capture image processing software. In many instances, electronic zooms (also referred to as digital zooms) also incorporate processing techniques to improve the image quality of the enlarged image e.g. by interpolating adjacent pixels.

Whilst having a zoom feature can be useful whilst filming, having a zooming action in a video sequence is normally considered bad practice. Virtually all professional and semi-professional productions (e.g. wedding videos) do not contain dramatic zooming actions in the final video. Some viewers find having a fast zoom action in a sequence to be disturbing. However, amateur users frequently tend to abuse the zoom feature and hence inevitably worsen the quality of the resulting video as perceived by a viewer.

When it is necessary to show a wide view followed by a more detailed view (or vice versa), the best practice is considered to be to change straight from the wide view to the detailed view rather than performing a zoom sequence.

Professional productions tend to utilise two or more cameras to achieve this affect, with the views suddenly switching from the camera with a wide viewing angle to a close up camera (or vice versa). This obviously requires the existence and simultaneous use of two such cameras.

If only a single camera is being utilised, then in order to achieve a change between a wide-angle view and a detailed view, the camera must zoom from one view to the other. Consequently, in order to edit the resulting image sequence to achieve an abrupt change from one view to another, it is necessary to cut out the zoom sequence and hence lose the intervening frames (and any associated audio track).

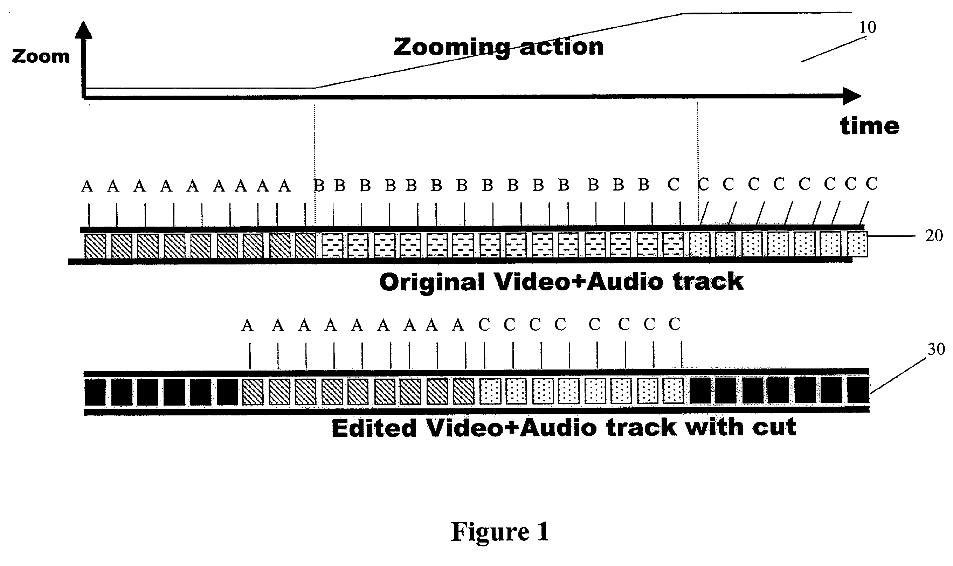

Figure 1 illustrates such an editing process. Chart 10 illustrates the level of the zoom of the camera as a function of time, with the frame sequence 20 illustrating the corresponding sequence of frames (A, B, C).

As can be seen, initially the camera is not zoomed in, and remains at a constant low magnification level producing frames A of a wide-angle view. Subsequently, the camera is progressively zoomed in producing frames B, until it reaches an adequate level of detail after which the zoom remains constant so as to provide frames C at a constant magnified level of detail.

The resulting edited video and audio track 30 cuts directly from the wide-angle viewed frames A to the magnified viewed frames C, so as to omit the zooming action. It will thus be appreciated that the frames B containing the zooming action will be lost, along with any associated audio track. Losing such information is undesirable.

EP 0853855, "Video Camera with Improved Zoom Capability", attempts to address this problem by providing a zoom camera which uses a combination of electronic (i.e. digital) zoom and optical zoom so as to obtain a rapid change in magnification, and hence minimise the period of time for which the zoom sequence exists. Whilst minimising the duration of the zoom sequence, the zoom sequence still exists.

### Statement of the Invention

In a first aspect, the present invention provides a method of processing a zoomed sequence of images comprising a first image at a first magnification, a later image at a second magnification, and at least one intermediate image at a magnification between said first and second magnifications, the method comprises: applying an electronic zoom to each of said intermediate images so as to magnify at least an area of each of the intermediate images to the same magnification level as the higher of the first and second magnifications.

Preferably, the method further comprises; producing an output image sequence comprising said first image, the electronically zoomed images and said later image.

Preferably, the method further comprises: determining a subject of the image sequence that appears in said first image, said intermediate image and said later image; and wherein said electronically zoomed images are arranged to comprise at least a portion of said subject.

Preferably, the method further comprises applying a soft cut image-image transition between at least one of said zoomed intermediate images and at least one of the final image and the first image.

In another aspect, the present invention provides a computer program arranged to perform the above method.

Preferably, the program is arranged to automatically determine if a subject of the image sequence appears in said first image, said intermediate image and said later image.

In a further aspect, the present invention provides a machine readable medium comprising the program.

In another aspect, the present invention provides an apparatus arranged to process a zoomed sequence of images comprising a first image at a first magnification, a later image at a second magnification, and at least one intermediate image at a magnification between said first and second magnifications, the apparatus comprising: processing means arranged to apply an electronic zoom to each of said intermediate images so as to magnify at least an area of each of the intermediate images to the same magnification level as the higher of the first and second magnifications.

In another aspect, the present invention provides a camera comprising an apparatus as above.

Preferably, the camera further comprises a user interface arranged for a user to select whether said apparatus operates automatically.

In a further aspect, the present invention provides editing device arranged to edit previously captured images, the device comprising an apparatus as claimed in claim.

### Brief Description of the Drawings

For a better understanding of the invention, and to show how embodiments of the same may be carried into effect, reference will now be made, by way of example, to the accompanying diagrammatic drawings in which:
Figure 1 illustrates a prior art editing sequence;
Figure 2 illustrates a video editing sequence according to a first embodiment of the present invention;
Figure 3 is a flow chart illustrating the steps involved in editing a video sequence as shown in Figure 2; and
Figure 4 illustrates a video editing sequence according to an alternative embodiment of the present invention.

### Detailed Description of Preferred Embodiments

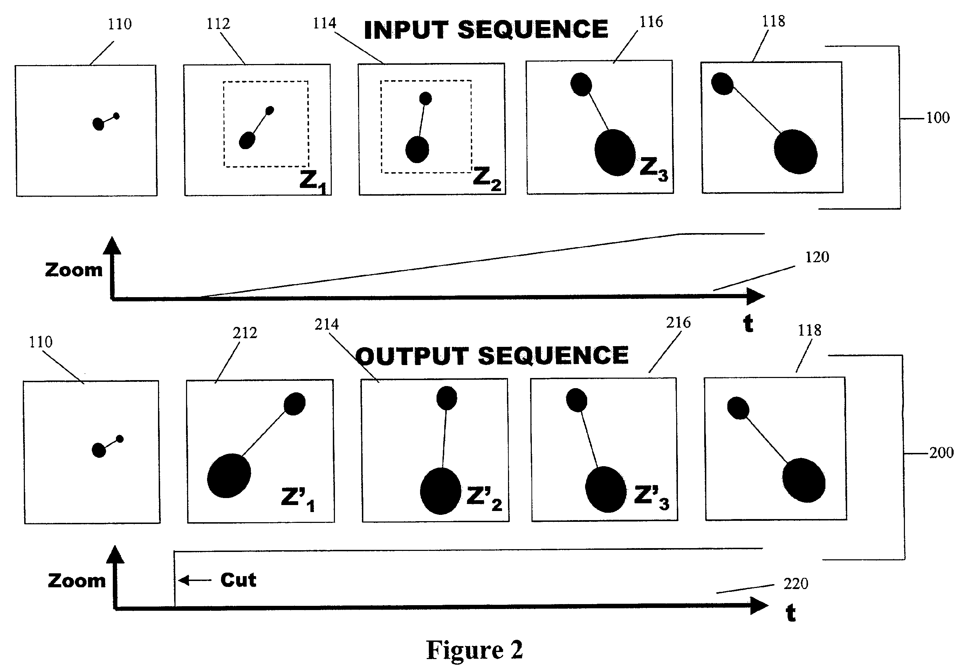

In figure 2, chart 120 illustrates a change in zoom level as a camera is progressively zoomed in from a first, relatively low level of magnification to a second, higher level of magnification. The sequence 100 illustrates the corresponding images as a function of time, from the image at a low level (e.g. no) magnification 110 up to the image at the high level of magnification 118, with intermediate zooming in images 112, 114, 116.

As can be seen, the subject of the image sequence is a simple pendulum with the camera progressively zooming in upon this subject.

Image sequence 200 illustrates the corresponding sequence of images (110, 210, 214, 216, 118) that have been processed according to an embodiment of the present invention, with chart 220 illustrating the effective zoom as a function of time for this image sequence 200. Each of the images within this sequence 200 are the same size i.e. they have the same area and the same aspect ratio.

As can be seen, the start image 110 and the final image 118 remain unchanged. However, varying degrees of electronic zoom have been applied to portions of the original intermediate images (112, 114, 116) to result in new, processed intermediate images (212, 214, 216) which have the same effective magnification as the final image 118. The portions of the original image to which the electronic zoom have been applied contain the subject, and are illustrated by a dotted line in images 112 and 114.

Consequently, a video sequence containing the processed images will cut from the low level magnification of image 110 to the high level magnification of images 212, 214, 216 & 218 i.e. an abrupt change in image magnification.

Such a technique allows a cut in a video sequence from a first level of magnification to a second level magnification without any loss in the images from the sequence or any associated audio signal. The resulting image sequence is substantially improved as the annoying zooming sequence has been eliminated and substituted by a cut, without losing any audio signal e.g. commentary or background noise and subject action.

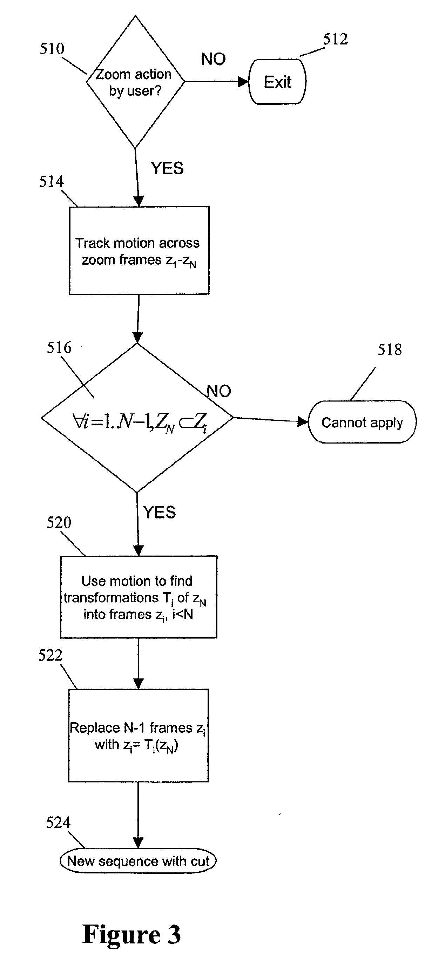

Figure 3 shows a flow chart illustrating the steps that can be carried out to edit a sequence of images as illustrated in figure 2.

Firstly, the sequence of images is analysed to determine whether there has been a zoom action (510). If no zoom action has been performed, then no processing of this type is carried out (512).

Assuming the sequence of images does contain a zoom action, then the subject of the image sequence is identified (in the example shown in figure 2, the subject was the pendulum). Typically, the subject of the zoom action can be determined by looking at the objects within the image which has the highest level of magnification. The motion of the subject is then tracked across each of the zoom sequence frames z₁ - z_{N}, where N is a integer (514).

A check (516) is then made to ensure that the subject of the zoom sequence is contained within each frame of the zoom sequence. In the simplest case, this can be performed by checking that the final frame in the zoom sequence (z_{N}) is contained within each intermediate frame (i.e. zᵢ, where i = 1...N).

In this embodiment, if the subject is not contained within each frame, then it is assumed that the desired editing procedure cannot be applied (518).

However, if the subject is indeed within each frame, then the transformations Tᵢ are determined for each frame zᵢ required to alter the magnification of a portion of each of the zoom frames z₁-z_{N-1} to be of the same level of magnification (and size) as frame z_{N} whilst consistently retaining the subject within each frame (step 520).

Subsequently, each of the intermediate frames (z₁-z_{N-1}) are replaced by corresponding frames which have undergone the transformations Tᵢ.

This results in a new sequence of frames (524), which have effectively cut from a first level of magnification to the second level of magnification without the zoom sequence, whilst retaining the motion of the subject within each frame, as well as any associated audio.

It will be appreciated that the above embodiment is provided by way of example only, and that various alternatives will be considered by the skilled person to still fall within the scope of the invention.

For instance, whilst in the preferred embodiment a check is made that the subject is within each frame (step 516), and procedure halted if such is not the case (step 518), it will be appreciated that the procedure could still proceed even if the subject is not within each frame. Whilst less desirable, this would still have the effect of removing the zoom sequence from the image sequence. In such a modified sequence, the subject might have the effect of gradually panning in and out of the shot. Alternatively, intermediate frames could be computer generated so as to contain the subject, based upon the frames on which the subject is always within shot.

The present invention could be implemented within a post capture editing suite e.g. on a computer arranged to edit a sequence of images after the images have been captured by a camera. Equally, the invention could be implemented within a camera. The invention method could be performed automatically or on the instructions of a user. For instance, the camera could be arranged to automatically implement the removal of a zooming feature unless other wise instructed by a user.

Removal of the zooming sequence could be conducted completely automatically, or with some user intervention e.g. by the user identifying a zoom sequence or the subject of a zoom sequence.

The above embodiment describes an example of the resulting image-image transition, after the invention has been applied, being a hard cut i.e. an instantaneous transition straight from an image at the first magnification to an image at the second, final magnification. The skilled person will appreciate that the zoom sequence could be swapped for any image-image transition. For instance, a soft cut could be utilised, an image-image transition that takes a short period of time to change between the images produced by the use of an embodiment of the present invention. Examples of such other soft cut image-image transitions that could be utilised include fading (one image gradually fades into another), random dissolve, matched dissolve, blinds, wiping, and curtain.

The whole of a zooming sequence could be removed, or only a pre-defined proportion. For instance, an initial input sequence might involve gradually zooming in on a view of a car as the car approaches from a distance, continuing the zoom to the face of the driver of the car. A user might select to gradually zoom in until the car fills the whole frame, and then to use the present invention to cut directly to the face of the driver.

It will be appreciated that whilst the invention might be applied to an image sequence that transitions from a first magnification to a second magnification and comprises a number of intermediate images, not all of the intermediate images might be electronically zoomed. For instance, only one intermediate image, or a subset of the total number of intermediate images, might have an electronic zoom applied. This is particularly relevant to image sequences to which a soft cut image-image transition is being applied. It will be appreciated that possibly only one of the intermediate images might need to be electronically zoomed for use in the soft cut transition.

Whilst the present invention has been described with reference to a zooming in sequence (i.e. in which the end frame is of higher magnification than the start frame), then equally it will be appreciated that the present invention can be applied to a zooming out sequence.

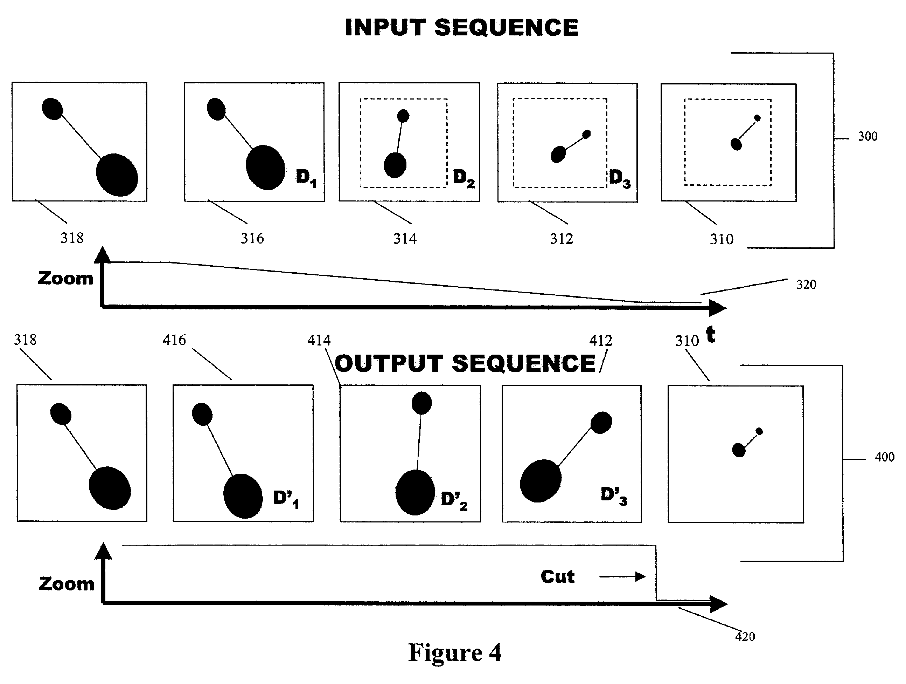

Figure 4 illustrates an alternative embodiment of the invention applied to a zooming out image sequence 300.

Chart 320 illustrates how the zoom level (i.e. magnification) initially starts from a relatively high value, corresponding to image frame 310, and is then successfully decreased as a function of time so as to zoom out from the subject (frames 312, 314, 316), to result in a low level of zoom, and a corresponding lower magnification/wider field of view image from 318.

Image sequence 400 illustrates the output framed sequence 400 that can be derived from the input sequence 300 by applying an embodiment of the present invention.

As can be seen, the first frame 310 and the final frame 318 remain from the input sequence. However, the intermediate frames 312, 314, 316 (corresponding to the frames during the zooming action) have been replaced by respective transformed frames 412, 414 and 416. Each of the transformed frames corresponds to a portion of a respective input frame that has been electronically magnified to the same magnification (i.e. zoom) level as the input frame 310. Thus, as illustrated by chart 420 the zoom level in the processed image sequence remains constant until the final frame, at which it drops to the lower level of magnification. Thus, a cut from a close up view to a wide-angle view is achieved, whilst retaining all audio and video action.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of processing a zoomed sequence of images comprising a first image at a first magnification, a later image at a second magnification, and at least one intermediate image at a magnification between said first and second magnifications, the method comprises:
applying an electronic zoom to each of said intermediate images so as to magnify at least an area of each of the intermediate images to the same magnification level as the higher of the first and second magnifications.

2. A method as claimed in claim 1, further comprising:
producing an output image sequence comprising said first image, the electronically zoomed images and said later image.

3. A method as claimed in claim 1 or claim 2, further comprising:
determining a subject of the image sequence that appears in said first image, said intermediate image and said later image; and
wherein said electronically zoomed images are arranged to comprise at least a portion of said subject.

4. A method as claimed in any one of the above claims, further comprising:
applying a soft cut image-image transition between at least one of said zoomed intermediate images and at least one of the final image and the first image.

5. A computer program arranged to perform the method as claimed in any one of the above claims.

6. A program as claimed in claim 5, arranged to automatically determine if a subject of the image sequence appears in said first image, said intermediate image and said later image.

7. A machine readable medium comprising a computer program as claimed in claim 5 or claim 6.

8. An apparatus arranged to process a zoomed sequence of images comprising a first image at a first magnification, a later image at a second magnification, and at least one intermediate image at a magnification between said first and second magnifications, the apparatus comprising:
processing means arranged to apply an electronic zoom to each of said intermediate images so as to magnify at least an area of each of the intermediate images to the same magnification level as the higher of the first and second magnifications.

9. A camera comprising an apparatus as claimed in claim 8.

10. A camera as claimed in claim 9, further comprising a user interface arranged for a user to select whether said apparatus operates automatically.

11. An editing device arranged to edit previously captured images, the device comprising an apparatus as claimed in claim.
